# EUROPEAN PATENT APPLICATION

(11) **EP 2 128 477 A1**
(43) Date of publication of application: **02.12.2009**
(21) Application number: 09161370.3
(22) Date of filing: 28.05.2009
(51) Int. Cl.: F16D 65/12, F16D 65/84

(54) **Disc rotor for disc brake**

(30) Priority: 28.05.2008 JP 2008138937
(71) Applicant: Hitachi Chemical Company, Ltd., Tokyo 163-0449 (JP)
(72) Inventor: Iga, Yoshihiko, Tokyo 100-8220 (JP); Moriya, Hiroshi, Tokyo 100-8220 (JP); Ebihara, Makoto, Ibaraki 317-8555 (JP); Baba, Kazuya, Ibaraki 317-8555 (JP)
(74) Representative: MERH-IP Matias Erny Reichl Hoffmann

(57) **Abstract**

A disc rotor for a disc brake with a vent hole shape which has an inner peripheral corner with a larger radius to reduce stress generated by braking torque and suppresses an increase in stress generated by pad pressure. The disc rotor 20 includes a first sliding part 1 connected to a bell housing 21, a second sliding part 2 located parallel to, and spaced in an axle direction from, the first sliding part 1, a plurality of ribs 6 circumferentially spaced between the sliding parts 1, 2, and vent holes formed by the ribs 6 and the sliding parts 1, 2. The inner peripheral shape of each of the vent holes 5 has at least two arc shapes with different curvature radii at an end perpendicular to the disc rotor' s rotation direction 9. The smallest curvature radius is 2 mm or more. An arc curvature radius on the first sliding part 1 side is larger than that on the second sliding part 2 side.

## Description

### FIELD OF THE INVENTION

The present invention relates to disc rotors for disc brakes of vehicles.

### BACKGROUND OF THE INVENTION

A disc brake is a kind of braking device as a vehicle component whereby frictional heat is generated by forcing brake pads against both sides of a disc (hereinafter called the disc rotor) rotating together with a wheel so that kinetic energy is converted into thermal energy to produce a braking effect. One example of such a disc rotor is illustrated in FIG. 20 of JP-A No. 2002-5207. Specifically a disc rotor 71 has fins 83 (hereinafter called the ribs) between a pair of sliding parts 75 and is fixed on a wheel through a main body 73 (hereinafter called the bell housing) having a hub 77. The sliding parts 75 have vent holes penetrating from the inner periphery to the outer periphery and as the disc rotor 71 rotates, air flows in the vent holes so that heat generated by friction between the brake pads and brake rotor is transferred and dissipated into the air.

From the viewpoints of fuel efficiency and steering stability, there is a strong demand for weight reduction in this type of brake rotor. Furthermore, with the growing tendency toward sophisticated vehicles, brakes are required to provide a stable braking force at higher vehicle velocities in a higher temperature range. In the past, disc rotors were mainly made of cast iron but in recent years, efforts to develop disc rotors of carbon ceramic (carbon fiber reinforced silicon carbide, hereinafter referred to as C/SiC) have been continued because carbon ceramic is advantageous in terms of weight, heat resistance, corrosion resistance, and abrasion resistance. Disc rotors of C/SiC provide higher abrasion resistance, heat resistance and corrosion resistance than disc rotors of cast iron. According to Walter Krenkel, B. Heidenreich, and R. Renz ("C/C-SiC Composites for Advanced Friction Systems," Advanced Engineering Materials, Vol. 4, 2002 February, pp. 427-436), the density of C/SiC is 2.4 g/cm³ or about one third of the density of cast iron (7.3 g/cm³). A lighter disc brake leads to reduction in unsprung weight in a vehicle and improvement in driving comfort and safety.

Although C/SiC disc rotors have many advantages over cast iron ones as described above, C/SiC is lower in strength than cast iron. According to the above article (authored by Walter Krenkel, B. Heidenreich, and R. Renz), the strength of C/SiC is 80 MPa or less than half of the strength of cast iron (200 MPa or more in case of FC200). For this reason, C/SiC disc rotors have a problem that the mechanical stress applied to them during braking may cause cracking. This mechanical stress is a combination of two types of stress: stress generated when a pad compresses a disc rotor (hereinafter called "pad pressure stress") and stress generated by the torque applied to the disc rotor through a disc rotor surface (surface of contact between the disc rotor and pad) (hereinafter called "torque stress"). Next, these two stresses and vent hole shapes for reducing such stresses will be explained in detail.

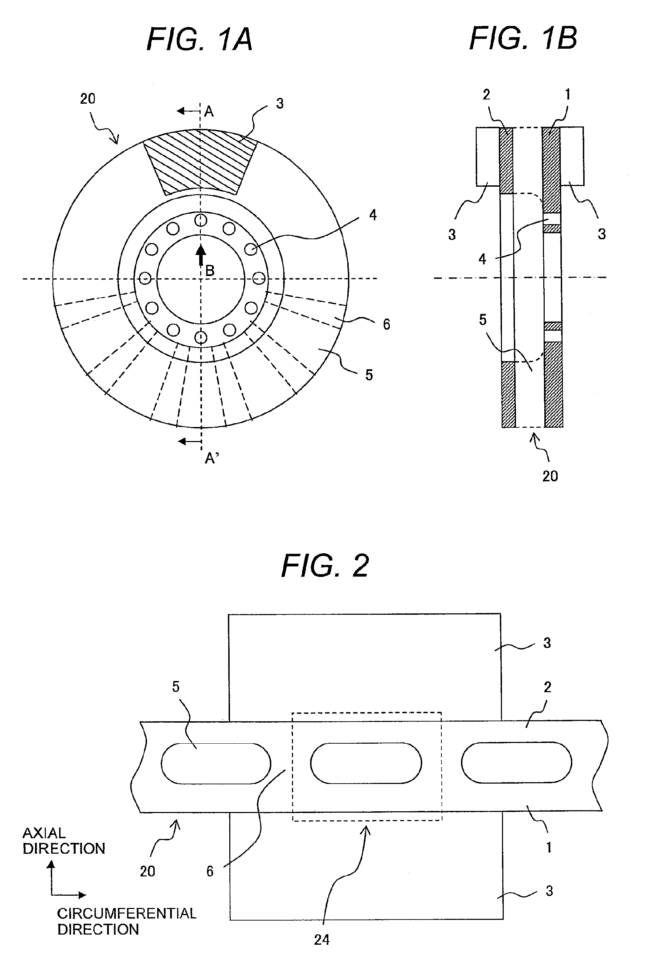

First, pad pressure stress will be explained referring to FIGS. 1A to 4. FIGS. 1A and 1B show the general structure of an conventional disc rotor 20 with a pad 3 in which FIG. 1A is a plan view of the second sliding part of the disc roller and FIG. 1B is a sectional view taken along the line A-A' in FIG. 1A, and FIG. 2 shows the disc rotor as seen from direction B (center of rotation of the disc rotor) in FIGS. 1A and 1B. In the disc rotor 20, pin holes 4 for fixing it on the bell housing are formed around the rotary shaft and vent holes 5 are formed between ribs 6.

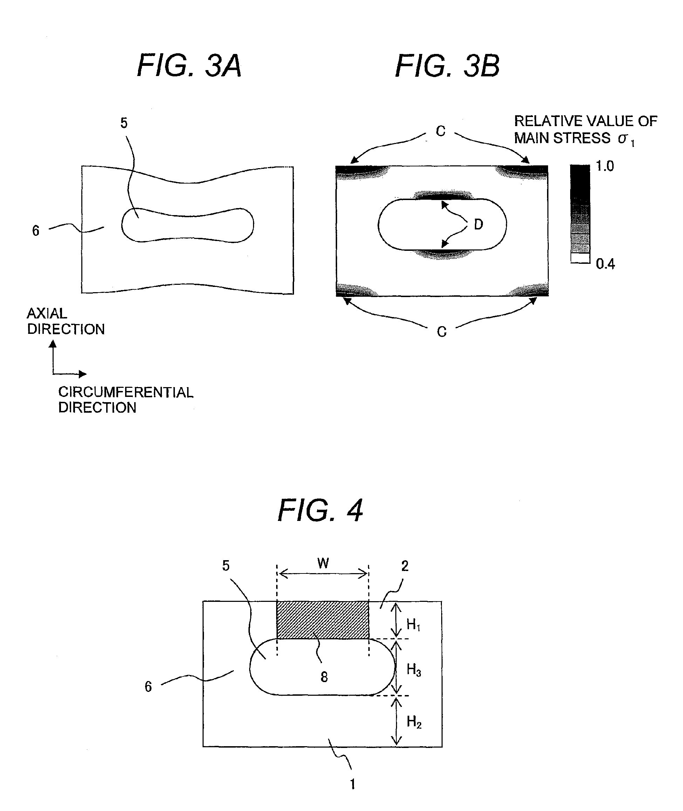

FIGS. 3A, 3B and 4 illustrate the structure for one period in the periodic structure 24 including vent holes and ribs as shown in FIG. 2. When the disc rotor 20 is compressed by the pads 3 as shown in FIG. 2, the vent hole 5 of the disc rotor 20 is deformed as illustrated in FIG. 3A. At this time, distribution of principal stress σ₁ of the disc rotor 20 is as shown in FIG. 3B and portions C and D in FIG. 3B are stretched toward the circumferential direction, causing an increase in stress. This stress distribution may be considered to be equivalent to that for beams with both ends fixed which are under uniformly distributed load. According to the beam theory, the maximum stress generated on a beam surface is proportional to the square of the beam length and inversely proportional to the square of the beam thickness. Therefore, in order to decrease the stress on the portions C and D (FIG. 3B), it is necessary to decrease width W of the beam part 8 (FIG. 4) and increase thicknesses H₁ and H₂ of the first sliding part 1 and second sliding part 2 (in other words, vent hole height H₃ should be decreased).

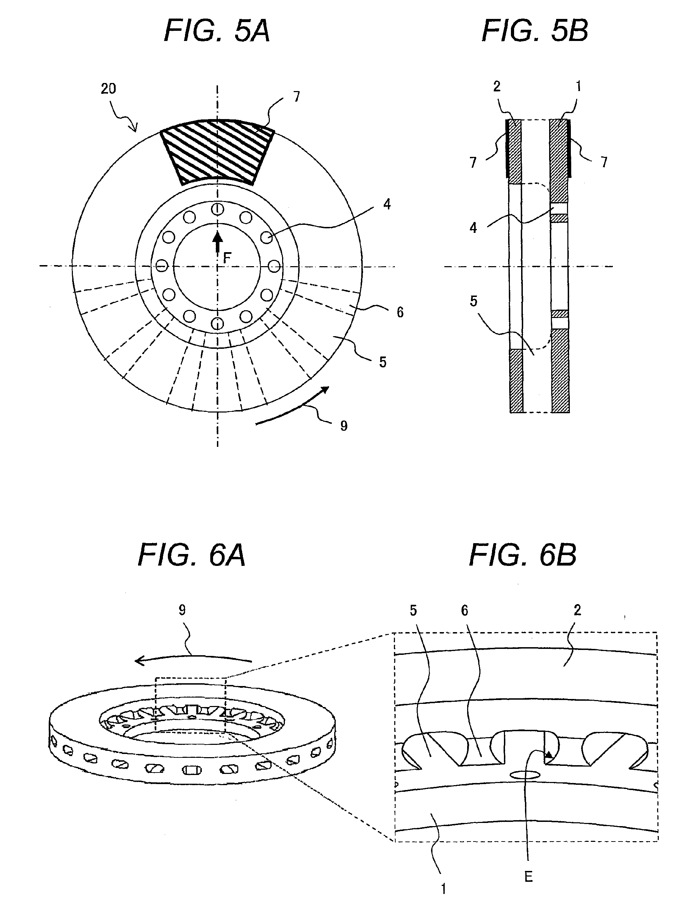

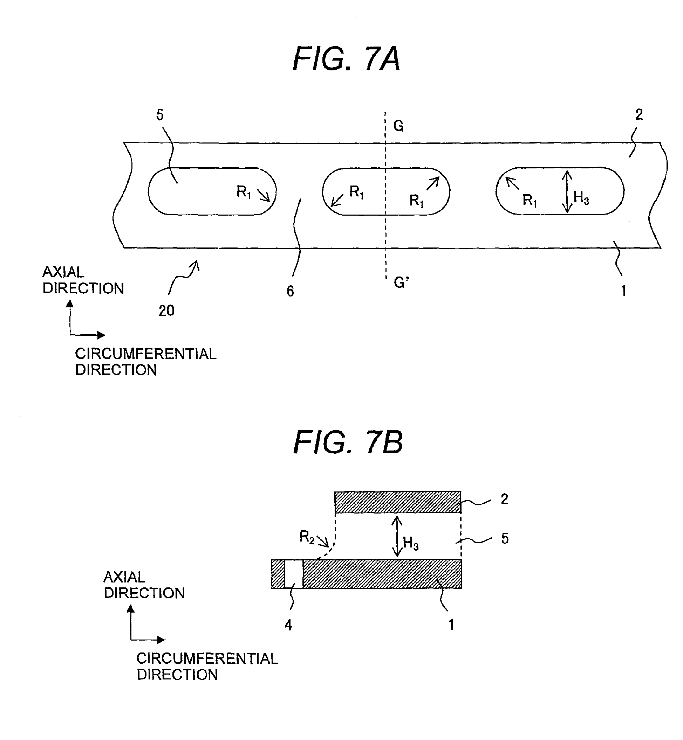

Next, torque stress will be explained referring to FIGS. 5A to 7B. Like FIGS. 1A and 1B, FIG. 5A shows the planar structure of the disc rotor and FIG. 5B is a sectional view taken along the line A-A' in FIG. 1A. FIG. 6A is a perspective view of the disc rotor and FIG. 6B is a partially enlarged perspective view thereof. FIG. 7A shows the shape of an conventional vent hole and FIG. 7B is a sectional view taken along the line G-G' in Fig. 7A.

In braking the vehicle, the pads 3 are pressed against the disc rotor 20 rotating together with the wheel and bell housing (not shown) and the disc rotor 20 receives a frictional force from the contact surface 7 of each pad 3 in the opposite direction to the rotor rotation direction. When the relative motion of the disc rotor 20 and pad 3 is seen from the rotating bell housing, it can be said that the disc rotor 20 remains still because it is fixed on the bell housing with pins (not shown) and relatively speaking, the pad 3 is rotating. In this condition, it may be considered that the disc rotor 20, displacement of which is restricted by the pins, receives a frictional force generated by friction with the pad 3 (the direction of the frictional force is opposite to the rotor rotation direction) from its surface. In order to find stress distribution of the disc rotor 20, a shear stress (circumferential-axial shear stress) along the circumferential direction was applied to the surface 7 of contact between the disc rotor 20 and pad 3 (FIGS. 5A and 5B) and stress analysis was conducted using the finite element method on the condition that displacement around the pin holes 4 was restricted. As a consequence, a large stress was found at point E (FIGS. 6A and 6B) in the inner peripheral corner of each vent hole (the corner is on the rib 6 and the first sliding part 1 connected to the bell housing, and also on the opposite side to the rotation direction 9 of the disc rotor 20 with respect to the left-right center of the vent hole).

Generally, reduction of stress in a corner of a structure can be achieved by increasing the radius of the corner, so the stress at point E can be reduced by decreasing R₁ (FIG. 7A) and R₂ (FIG. 7B). However, this approach has the following problem. FIG. 7A shows the disc rotor as seen from direction F in FIG. 5A and FIG. 7B is a sectional view taken along the line G-G' in FIG. 7A. For the conventional vent hole shape shown in FIG. 7A, R₁ is limited to half of vent hole height H₃ or less. Hence, vent hole height H₃ must be increased in order to reduce the stress at point E by increasing R₁. This means that thicknesses H₁ and H₂ of the first sliding part 1 and second sliding part 2 must be decreased.

As described above, for reduction in pad pressure stress, the vent hole height should be decreased and for reduction in torque stress, the vent hole height should be increased in order to increase vent hole corner radius R₁. In other words, a problem with the conventional vent hole shape as shown in FIGS. 7A and 7B is that when the vent hole height is increased to reduce torque stress (disc thickness is decreased), the pad pressure stress largely increases in inverse proportion to the square of the disc thickness.

So far the problem with conventional vent hole shapes exemplified in the vent hole shape shown in FIG. 7A has been discussed. Another example is disclosed in JP-A No. 11 (1999) -257386 where the vent hole is square or has curved corners on the second sliding part side. In this vent hole shape, since the corner corresponding to point E in FIG. 6B has no radius (no curve), torque stress is larger than in the shape shown in FIG. 7A.

FIG. 2 in JP-A No. 59 (1984)-194139 shows that in the vent hole shape, the first sliding part side corner has a smaller radius than the second sliding part side corner. In this shape, the corner corresponding to point E in FIG. 6B has a smaller radius than in the vent hole shape shown in FIG. 7A, so torque stress is larger than in the vent hole shape shown in FIG. 7A.

Although the problem discussed so far is related to disc rotors for ceramic disc brakes, a solution to the problem can also reduce stress, which is applied to a cast iron disc rotor during braking.

The present invention has been made in view of the above related art and has an object to provide a vent hole shape which reduces stress generated by braking torque (torque stress) as mentioned above and also prevents an increase in stress generated by compression with pads (pad pressure stress). For this purpose, the invention provides such a vent hole shape that the radius of the inner peripheral corner of the vent hole is larger while the vent hole height is constant.

### SUMMARY OF THE INVENTION

In order to achieve the above object, according to one aspect of the present invention, there is provided a disc rotor for a disc brake which includes a first sliding part connected to a bell housing, a second sliding part located parallel to, and spaced in an axle direction from, the first sliding part, a plurality of ribs circumferentially spaced between the sliding parts as a pair, and vent holes formed by the ribs and the paired sliding parts. In the disc rotor, an inner peripheral shape of each of the vent holes has at least two arc shapes with different curvature radii at an end perpendicular to the rotation direction of the disc rotor, the smallest curvature radius Rs is 2 mm or more, and an arc curvature radius on the first sliding part side is larger than an arc curvature radius on the second sliding part side.

According to the invention, since the inner peripheral corner of the vent hole, where torque stress in braking is relatively large, can have a larger radius while the vent hole height is constant, torque stress can be reduced.

Similarly, torque stress in braking can be reduced while the vent hole height is constant. In this case, even when the vent hole shape is changed, the width W of the beam part of the sliding part is the same as in the conventional structure, so an increase in pad pressure stress due to the change in the vent hole shape can be suppressed more effectively than with the above structure. In addition, since the radius of the inner peripheral corner of the disc rotor is larger than in the conventional shape, torque stress can be further reduced.

Alternatively, in the disc rotor, at an end perpendicular to the rotation direction of the disc rotor on an opposite side to the disc rotation direction, the arc curvature radius on the first sliding part side may be smaller than the arc curvature radius on the second sliding part side.

According to a second aspect of the invention, in the disc rotor, an inner peripheral shape of each of the vent holes includes at least two arc shapes with different curvature radii at an end perpendicular to the rotation direction of the disc rotor, an arc curvature radius on the first sliding part side is smaller than an arc curvature radius on the second sliding part side, the smallest curvature radius is 2 mm or more, and a curvature radius larger than the smallest curvature radius Rs is as large as 1.5 times or more of Rs.

According to a third aspect of the invention, in the disc rotor, an inner peripheral shape of each of the vent holes includes at least two arc shapes with different curvature radii at an end perpendicular to the rotation direction of the disc rotor. At the end on the same side as the rotation direction of the disc rotor with respect to a left-right center in a circumferential direction of each vent hole, an arc curvature radius on the first sliding part side is smaller than an arc curvature radius on the second sliding part side, and at the end on the opposite side to the rotation direction the disc rotor with respect to the left-right center in the circumferential direction of each vent hole, an arc curvature radius on the first sliding part side is larger than an arc curvature radius on the second sliding part side, and the smallest curvature radius Rs is 2 mm or more.

Preferably an inner peripheral corner of a connection between the first sliding part connected to the bell housing and each of the ribs has a curvature radius R larger than the height of the vent hole.

According to a fourth aspect of the invention, in the disc rotor, the vent hole's shape is oval as slanted toward the rotation direction of the disc rotor. Regarding the slanting direction, a pointed part of the oval on the rotation direction side of the disc rotor is at a lower position than the rest of the oval (closer to the first sliding part).

Preferably the material of the disc rotor is ceramic. Alternatively the material of the disc rotor may be cast iron. Preferably at least the first sliding part, the second sliding part, and the ribs are united. Specifically these members are united by casting or molding.

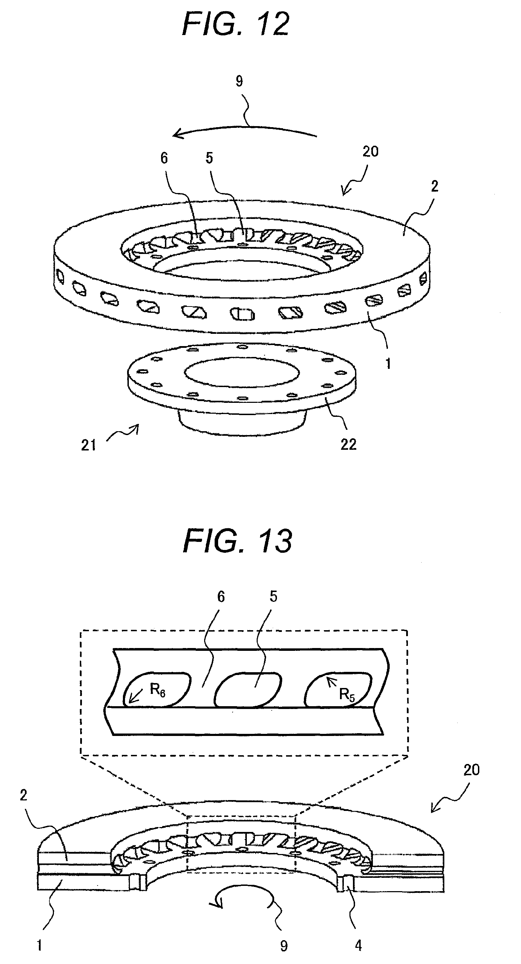

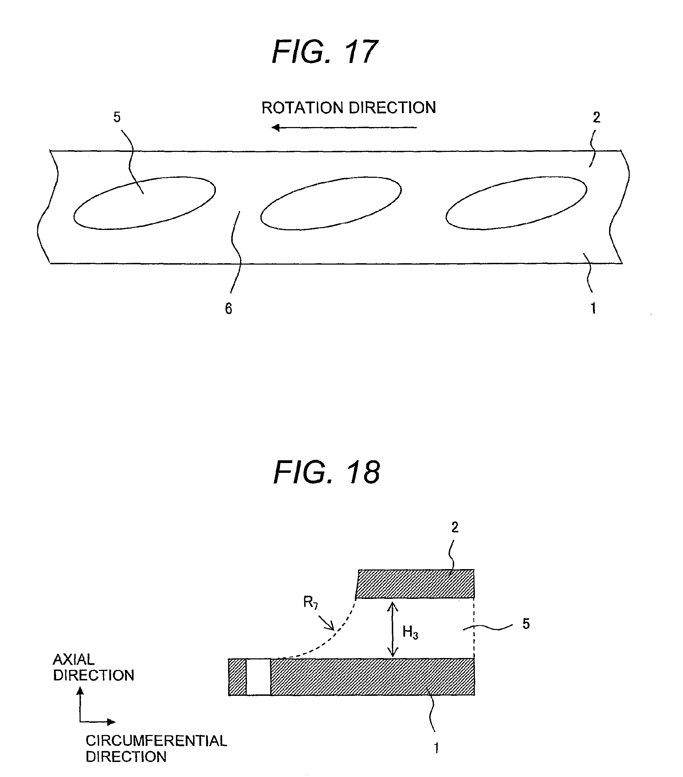

Preferably the inner peripheral shape of the vent hole is rotationally symmetric in its plane. As experimentally demonstrated, in order to minimize torque stress, it is preferable that the vent hole shape is rotationally symmetric (for example, the shapes shown in FIGS. 13 and 17).

### BRIEF DESCRIPTION OF THE DRAWINGS

FIGS. 1A and 1B show the general structure of a conventional disc rotor with a pad, in which FIG. 1A is a plan view and FIG. 1B is a sectional view;
FIG. 2 is a side view of the disc rotor shown in FIG. 1A, as seen from direction B;
FIG. 3A shows that a structure for one period in the periodic structure including vent holes and ribs as shown in FIG. 2 is deformed as a result of compression from above and below and FIG. 3B shows main stress distribution of the deformed structure;
FIG. 4 illustrates the structure for one period in the periodic structure including vent holes and ribs as shown in FIG. 2;
FIG. 5A is a plan view of the whole disc rotor excluding the pad shown in FIG. 1A and FIG. 5B is a sectional view thereof;
FIG. 6A shows the general structure of the conventional disc rotor and FIG. 6B is a partially enlarged view thereof;
FIG. 7A is a sectional view showing the inner peripheral shape of the vent holes shown in FIG. 6A and FIG. 7B is a sectional view taken along the line G-G' in Fig. 7A;
FIG. 8 shows the general structure of a disc rotor according to a first embodiment of the present invention;
FIG. 9 shows a cross section of the disc rotor shown in FIG. 8 in combination with an enlarged view of its vent hole shape;
FIG. 10 shows the general structure of the disc rotor according to the first embodiment of the present invention;
FIG. 11 is a graph of comparison in torque stress between the conventional vent hole shape and the vent hole shape in the first embodiment;
FIG. 12 shows the general structure of a disc rotor shape according to a second embodiment of the present invention;
FIG. 13 shows a cross section of the disc rotor shown in FIG. 12 in combination with an enlarged view of its vent hole shape;
FIG. 14A shows the conventional vent hole shape, FIG. 14B shows the vent hole shape in the second embodiment, and FIG. 14C shows the vent hole shape in the first embodiment;
FIG. 15 shows the boundary condition for two-dimensional analysis of pad pressure stress;
FIG. 16 is a graph showing the result of two-dimensional analysis of pad pressure stress;
FIG. 17 shows a vent hole shape in the second embodiment; and
FIG. 18 shows another example of a radial-axial cross section of the vent hole shapes in the first and second embodiments.

### DETAILED DESCRIPTION OF THE PREFERRED EMBODIMENTS

Next, the preferred embodiments of the present invention will be described in detail referring to the accompanying drawings. In all the drawings that illustrate the preferred embodiments, elements with like functions are designated by like reference numerals and repeated descriptions of such elements are omitted.

### First Embodiment

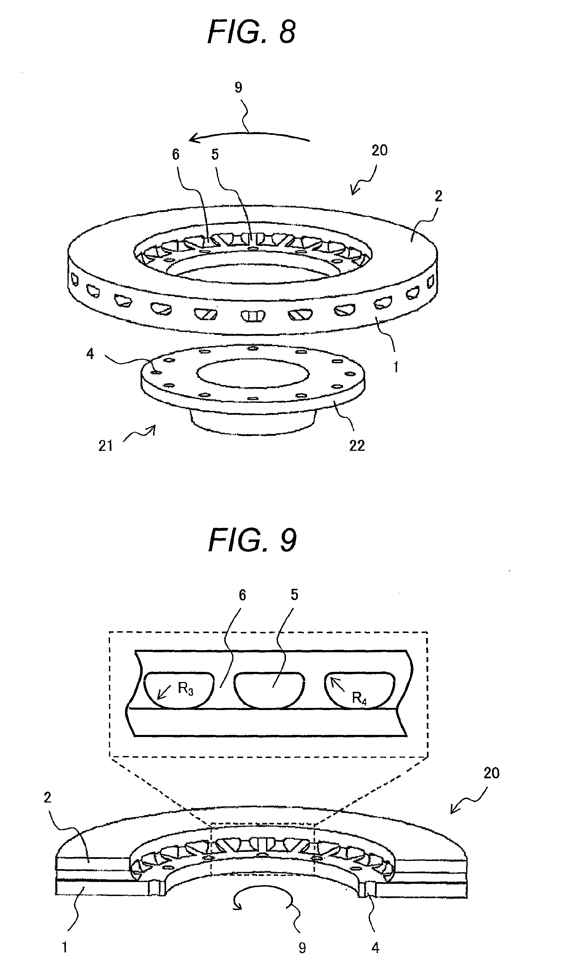

The first embodiment of the present invention is described below referring to FIGS. 8 and 9. FIG. 8 is a perspective view of the disc rotor according to the first embodiment where the whole disc rotor assembly including a bell housing 21 is shown. FIG. 9 shows a cross section of a disc rotor 20 and its vent hole shape in enlarged form. As the disc rotor material, an aluminum alloy with dispersed cast iron or ceramic particles or carbon fiber reinforced silicon carbide (C/SiC) is chosen. As the bell housing material, iron, aluminum alloy or titanium is chosen. Although FIG. 8 shows that the disc rotor 20 and bell housing 21 are separate from each other, it is also possible that the disc rotor 20 and bell housing 21 are integrally molded. Alternatively, the bell housing 21 may lie over the disc rotor 20 shown in FIG. 8.

The disc rotor 20 (FIG. 8) is connected to the bell housing 21 through pins (not shown) and the bell housing 21 is connected to the wheel (not shown). In braking the vehicle, pads are pressed against the disc rotor 20 to apply a braking torque to the disc rotor 20 in the opposite direction to the rotor rotation direction 9 and this braking torque is transmitted through the bell housing 21 to the wheel so that the wheel rotation speed decreases. In this process, the kinetic energy of the vehicle and wheel is converted into frictional heat between the pads and disc rotor 20, resulting in a rise in the temperature of the disc rotor 20. For this reason, vent holes 5 are provided in the disc rotor 20 to allow cooling air to flow therein. The upper illustration in FIG. 9 shows the shape of the vent holes (FIG. 8) as seen from the inner periphery of the disc rotor 20.

Next, the vent hole shape (FIG. 9) characteristic of the present invention and its effect will be explained in detail.

First, the shape of the vent hole 5 is described below. The vent hole inlet shape has two types of arcs with different curvature radii where the radius (R₃ in FIG. 9) of the vent hole inlet corner on the first sliding part 1 side is larger than the radius (R₄ in FIG. 9) of the vent hole inlet corner on the second sliding part 2 side. With this shape, R₃ can be larger than half of the vent hole height H₃ and torque stress can be reduced while the vent hole height is kept constant. As a concrete example, if the vent hole height H₃ is 8 mm, R₃ and R₄ may be 6 mm and 2 mm respectively.

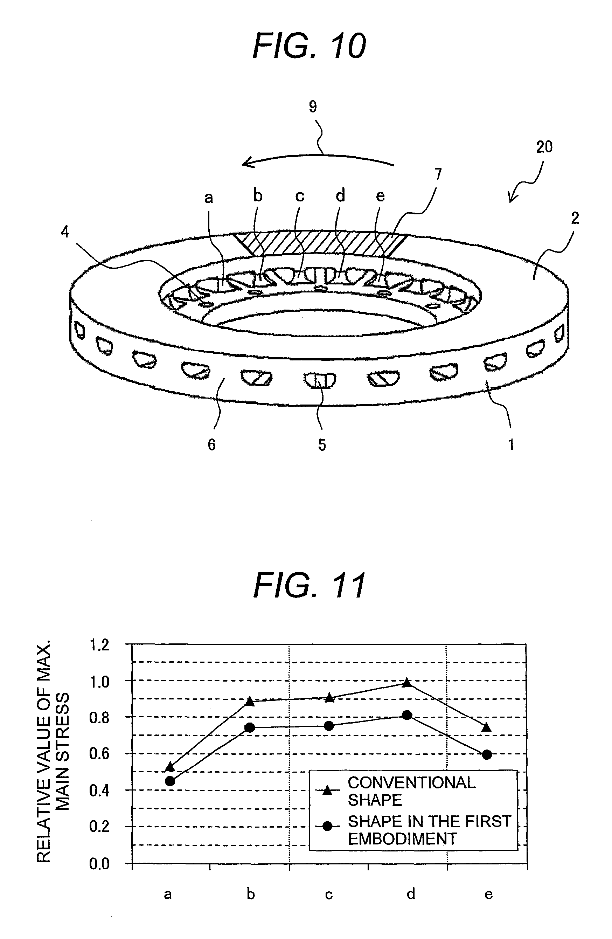

The effect of this embodiment is as follows. In order to investigate how much this embodiment reduces torque stress, a shear stress τzθ (the direction of stress is opposite to the rotor rotation direction 9) was applied to the contact surfaces 7 of the disc rotor 20 with the upper and lower pads 3 along the circumferential direction and stress analysis was conducted using the finite element method in the condition that displacement around the pin holes 4 was restricted. The material which was used for the disc rotor 20 in this test is C/SiC which has a Young's modulus of 35 GPa and a Poisson's ratio of 0.14. The stress distribution of the conventional vent hole shape (FIGS. 6A and 6B) and that of the vent hole shape in this embodiment (FIG. 9) were calculated. Comparison in maximum main stress among ribs a through e (FIG. 10) is shown in FIG. 11. The maximum stress with the conventional vent hole shape is used as standard in FIG. 11. The graph indicates that the vent hole shape in this embodiment reduces stress by 20% in comparison with the conventional vent hole shape. Thus it has been demonstrated that this embodiment reduces torque stress effectively even when the vent hole height is the same as that of the conventional vent hole shape. Although the disc rotor structure shown in FIGS. 8 and 9 has a vent hole shape which is uniform in the radial direction from the inner periphery to the outer periphery, even a disc rotor structure with radially varying vent hole widths and heights will produce an effect similar to the above.

The disc rotor 20 shown in FIG. 8 has a radial-axial cross section as illustrated in FIG. 7B. Here, the radius R (R₂ in FIG. 7B) of the inner peripheral corner of the connection between the first sliding part 1 and rib 6 is smaller than the vent hole height H₃ but it may be larger than H₃ like the shape shown in FIG. 18 (the corner here means a corner in a r-z plane in the cylindrical coordinate system representing the disc rotor where r denotes the radial direction and z denotes the axial direction). In the shape shown in FIG. 18, the radius R of the corner at point E in FIG. 6B, where torque stress is relatively large, can be larger than in the shape shown in FIG. 9, so torque stress can be smaller than in the disc rotor structure shown in FIG. 9.

### Second Embodiment

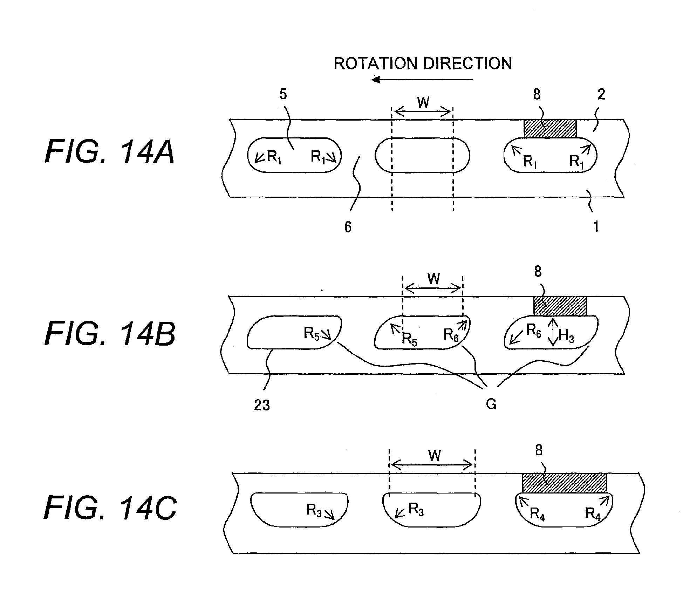

The second embodiment of the present invention will be described referring to FIG. 12 to FIG. 14C. FIG. 12 is a perspective view of a disc rotor shape according to the second embodiment where the whole disc rotor assembly including a bell housing 21 is shown. FIG. 13 shows a cross section of the disc rotor 20 and its vent hole shape in enlarged form. FIG. 14A shows the conventional vent hole shape, FIG. 14B shows the vent hole shape in this (second) embodiment, and FIG. 14C shows the vent hole shape in the first embodiment. Next, the vent hole shape (FIG. 14B) characteristic of this embodiment and its effect will be explained in detail.

First, the shape of the vent hole 5 is described below. As with the vent hole shape in the first embodiment (FIG. 14C), with the vent hole shape in the second embodiment (FIG. 14B), the radius R of the corner with relatively large torque stress (point G in FIG. 14B) is large and torque stress is thus smaller than with the conventional shape. The vent hole shape shown in FIG. 14B includes two different curvature radii R₅ and R₆ (R₅ > R₆) and width W of the beam part 8 of the disc (described earlier) can be equal to that in FIG. 14A, so the pad pressure stress with the vent hole shape shown in FIG. 14B is almost equal to that in FIG. 14A. In other words, with the vent hole shape shown in FIG. 14B, the increase in pad pressure stress is smaller than in the first embodiment (FIG. 14C) even though the vent hole shape is changed to reduce torque stress. As a concrete example, if the vent hole height H₃ is 8 mm, R₅ and R₆ may be 6 mm and 2 mm respectively.

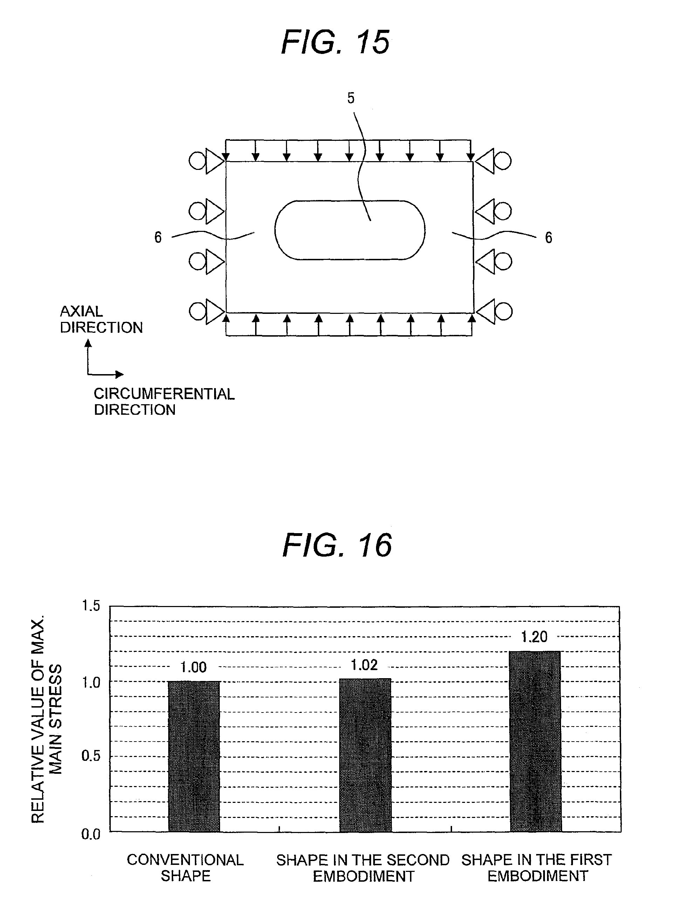

The effect of this embodiment is as follows. In order to investigate the effect of this embodiment, as illustrated in FIG. 15 which shows the two-dimensional structure 24 (simulated circumferential axial cross section of the disc rotor 20) for one period in the periodic structure 24 including vent holes 5 and ribs 6, stress analysis was conducted using the finite element method in the condition that circumferential displacement on lines corresponding to periodic boundaries was restricted and a given pressure was applied from above and below the disc rotor. The material which was used for the disc rotor 20 in this test is C/SiC which has a Young's modulus of 35 GPa and a Poisson's ratio of 0.14. The vent hole shapes shown in FIGS. 14A to 14C were tested and comparison in maximum main stress among the three shapes is shown in FIG. 16. The maximum main stress with the conventional shape is used as standard in FIG. 16. FIG. 16 indicates that the maximum main stress with the shape in the first embodiment (FIG. 14C) is 20% larger than with the conventional shape. The reason for this is that although the vent hole height in the first embodiment is equal to the vent hole height in the conventional shape, the width W of the disc beam part 8 in the shape in the first embodiment is larger than in the conventional shape. On the other hand, it is apparent that the difference in main stress between the conventional shape (FIG. 14A) and the shape in the second embodiment (FIG. 14B) is very small (2% or less). The reason for this is that the vent hole height and beam part 8 width W in the second embodiment are the same as those in the conventional shape. This means that the second embodiment can suppress an increase in pad pressure stress even though its vent hole shape is changed for the purpose of torque stress reduction.

Although the vent hole shape shown in FIGS. 12, 13, and 14B includes a linear portion 23, it does not always have to include a linear portion. A curve may be used in place of the linear portion 23, forming a slanted oval as shown in FIG. 17.

The disc rotor shown in FIG. 13 has a radial-axial cross section as illustrated in FIG. 7B. Here, the radius R (R₂ in Fig. 7B of the inner peripheral corner oF the connection between the first sliding part 1 and rib 6 is smaller than the vent hole height H₃ but it may be larger than H₃ like the shape shown in FIG. 18 (the corner here means a corner in a r-z plane in the cylindrical coordinate system representing the disc rotor where r denotes the radial direction and z denotes the axial direction). In the shape shown in FIG. 18, the radius R of the corner at point E in FIG. 6B, where torque stress is relatively large, can be larger than in the shape shown in FIG. 13, so torque stress can be smaller than in the disc rotor structure shown in FIG. 13.

The invention made by the present inventors has been so far explained in reference to the preferred embodiments thereof. However, the invention is not limited thereto and it is obvious that these details may be modified in various ways without departing from the spirit and scope of the invention.

The above described exemplary embodiments can be combined in any way as a whole or in part in order to build up further embodiments optimized for the respective application. As far as such modifications of the above described embodiments are readily apparent for the skilled person they shall be disclosed implicitly by the above described embodiments.

## Claims

1. A disc rotor for a disc brake comprising:
a first sliding part (1) connected to a bell housing (21);
a second sliding part (2) located parallel to, and spaced in an axle direction from, the first sliding part (1);
a plurality of ribs (6) circumferentially spaced between the
sliding parts (1, 2) as a pair; and
vent holes (5) formed by the ribs (6) and the paired sliding parts (1, 2),
wherein an inner peripheral shape of each of the vent holes (5) has at least two arc shapes with different curvature radii at an end perpendicular to the disc rotor' s (20) rotation direction (9);
wherein smallest curvature radius Rs is 2 mm or more; and
wherein an arc curvature radius on the first sliding part (1) side is larger than an arc curvature radius on the second sliding part (2) side.

2. The disc rotor (20) for a disc brake according to Claim 1, wherein as for the inner peripheral shape of the vent hole (5), at an end perpendicular to the disc rotor rotation direction (9) on an opposite side to the disc rotation direction (9), the arc curvature radius on the first sliding part (1) side is smaller than the arc curvature radius on the second sliding part (2) side.

3. The disc rotor (20) for a disc brake according to claim 1, wherein the inner peripheral shape of each of the vent holes (5) includes at least two arc shapes with different curvature radii at an end perpendicular to the rotation direction (9) of the disc rotor (20);
wherein the arc curvature radius on the first sliding part (1) side is smaller than the arc curvature radius on the second sliding part (2) side; and
wherein the smallest curvature radius Rs is 2 mm or more; wherein a curvature radius larger than the smallest curvature radius is as large as 1.5 times or more of Rs.

4. The disc rotor (20) for a disc brake according to claim 1, wherein the inner peripheral shape of each of the vent holes (5) includes at least two arc shapes with different curvature radii at an end perpendicular to the rotation direction (9) of the disc rotor (20);
wherein at the end on the same side as the disc rotor rotation direction (9) with respect to a left-right center in a circumferential direction of each vent hole (5), an arc curvature radius on the first sliding part (1) side is smaller than an arc curvature radius on the second sliding part (2) side;
wherein at the end on the opposite side to the disc rotor' s rotation direction (9) with respect to the left-right center in the circumferential direction of each vent hole (5), an arc curvature radius on the first sliding part (1) side is larger than an arc curvature radius on the second sliding part (2) side; and
wherein smallest curvature radius Rs is 2 mm or more.

5. The disc rotor (20) for a disc brake according to at least one of the Claims 2-4, wherein an inner peripheral corner of a connection between the first sliding part (1) connected to the bell housing (21) and each of the ribs (6) has a curvature radius R larger than the vent hole' s (5) height.

6. The disc rotor (20) for a disc brake according to at least one of the Claims 1-5, wherein the shape of the vent hole (5) is oval with a pointed part on the disc rotor rotation direction (9) side being slanted to be closer to the first sliding part (1).

7. The disc rotor (20) for a disc brake according to at least one of the Claims 1-6, wherein the material of the disc rotor (20) is ceramic.

8. The disc rotor (20) for a disc brake according to at least one of the Claims 1-6, wherein the material of the disc rotor (20) is cast iron.

9. The disc rotor (20) for a disc brake according to at least one of the Claims 5-8, wherein at least the first sliding part (1), the second sliding part (2), and the ribs (6) are united.

10. The disc rotor (20) for a disc brake according to at least one of the Claims 1-9, wherein the inner peripheral shape of the vent hole (5) is rotationally symmetric in its plane.

11. The disc rotor (20) for a disc brake according to Claim 3, wherein the material of the disc rotor (20) is ceramic.

12. The disc rotor (20) for a disc brake according to Claim 4, wherein the material of the disc rotor (20) is ceramic.

13. The disc rotor (20) for a disc brake according to Claim 6, wherein the material of the disc rotor (20) is ceramic.

14. The disc rotor (20) for a disc brake according to at least one of the Claims 4-13, wherein the inner peripheral shape of the vent hole (5) is rotationally symmetric in its plane.

15. The disc rotor (20) for a disc brake according to at least one of Claims 6-13, wherein the inner peripheral shape of the vent hole (5) is rotationally symmetric in its plane.
